Europäisches Patentamt

European Patent Office

Office européen des brevets

(19)

(11) Veröffentlichungsnummer: **0 039 770**
**B1**

(12) **EUROPÄISCHE PATENTSCHRIFT**

(45) Veröffentlichungstag der Patentschrift:
25.01.84

(21) Anmeldenummer: 81102367.0

(22) Anmeldetag: 28.03.81

(51) Int. Cl.³: **G 02 F 1/133**, G 09 F 9/35

(54) Passives elektrooptisches Anzeigeelement und Verfahren zu seiner Herstellung.

(30) Priorität: 08.05.80 DE 3017551

(43) Veröffentlichungstag der Anmeldung:
18.11.81 Patentblatt 81/46

(45) Bekanntmachung des Hinweises auf die Patenterteilung:
25.01.84 Patentblatt 84/4

(84) Benannte Vertragsstaaten:
CH FR GB IT LI NL SE

(56) Entgegenhaltungen:
CH - A - 589 306

(73) Patentinhaber: VDO Adolf Schindling AG,
Gräfstrasse 103, D-6000 Frankfurt/Main (DE)

(72) Erfinder: Caramel, Rudolf, Rebhuhnweg 2,
D-6238 Hofheim (DE)

(74) Vertreter: Könekamp, Herbert, Dipl.-Ing., Sodener
Strasse 9, D-6231 Schwalbach (DE)

Passives elektrooptisches Anzeigeelement und Verfahren zu seiner Herstellung

Die Erfindung bezieht sich auf ein passives elektrooptisches Anzeigeelement zur Darstellung von Informationen, mit zwei im Abstand voneinander angeordneten, eine Kammer zwischen sich bildenden Glasplatten, an denen kammerseitig jeweils ein durchsichtiger Elektrodenträger angeordnet ist, zwischen denen die Kammer mit einer Flüssigkristallsubstanz gefüllt ist, und an deren Aussenflächen Polarisatoren angeordnet sind.

Bei derartigen bekannten Anzeigeelementen ist es von Nachteil, dass der Polarisator auf der Seite des Betrachters derart spiegeln kann, dass ein Ablesen der Anzeige nicht mehr möglich ist. Dies ist insbesondere dann hinderlich, wenn die Anzeige stationär montiert ist und nicht in eine solche Position gebracht werden kann, in der die Spiegelung nicht zum Betrachter gerichtet ist.

Man hat zur Vermeidung einer solchen Spiegelung bereits den dem Betrachter zugewandten Polarisator konvex ausgebildet. Neben dem höheren Platzbedarf ist das Herstellungsverfahren für einen solchen Polarisator aber aufwendig und teuer.

Es ist daher Aufgabe der Erfindung ein Anzeigeelement der eingangs genannten Art zu schaffen, das auf einfache Weise ohne zusätzliche Bauteile entspiegelt ausgebildet ist.

Diese Aufgabe wird erfindungsgemäss dadurch gelöst, dass der Polarisator auf der Sichtseite des Anzeigeelements an seiner der Glasplatte abgewandten Fläche mit einer Vielzahl von Vertiefungen irregulärer Struktur versehen ist. Durch diese irreguläre Struktur wird eine Streuung des vom Polarisator reflektierten Lichts erreicht, wodurch die Ablesung des Anzeigeelements nicht mehr durch Spiegelung beeinträchtigt werden kann.

Da ein bereits vorhandenes Teil des Anzeigeelements zur Entspiegelung benutzt wird und dieses Teil in seiner Bauhöhe auch nicht verändert wird, wird auf vorteilhafte Weise ohne zusätzliche Bauteile und ohne Bauhöhenvergrösserung des Anzeigeelements eine Entspiegelung erreicht.

Die Vertiefungen können sowohl einen etwa halbkugelförmigen Querschnitt als auch einen etwa pyramidenförmigen Querschnitt besitzen.

Vorteilhafterweise werden die Vertiefungen durch einen Prägevorgang hergestellt. Um den Druck und die Zeitdauer beim Prägevorgang reduzieren zu können, kann der Prägevorgang ein Warmverformungsvorgang sein.

Besonders wirtschaftlich können die geprägten Polarisatoren dadurch hergestellt werden, dass der Prägevorgang durch Zusammenpressen eines Blockes von ein oder mehreren nebeneinander geschichteten Paketen bestehend aus Gegenplatte, Polarisator, Prägeform und Heizelement erfolgt. Dabei können bei einem Prägevorgang gleichzeitig mehrere Polarisatoren hergestellt werden.

Die Prägeform kann eine mit den Vertiefungen entsprechenden Erhebungen versehene Hartmetallplatte sein, durch die der Polarisator gegen eine Gegenplatte pressbar ist. Eine andere Möglichkeit besteht darin, dass die Prägeform eine mit den Vertiefungen entsprechenden Erhebungen versehene drehbare Prägewalze ist, zwischen der und einer dazu parallel angeordneten ebenfalls drehbaren Gegenwalze der Polarisator durchlaufbar ist. Bei beiden Verfahren muss der Druck, mit dem der Polarisator durch die Prägeform gegen eine Gegenplatte bzw. durch die Prägewalze gegen eine Gegenwalze gedrückt wird, so hoch sein und der ganze Vorgang so lange andauern, dass eine sichere plastische Verformung des Polarisators erfolgt.

Ein aufgrund seiner Festigkeit besonders geeigneter Werkstoff für die Prägeform ist Messing.

Um sowohl die Lebensdauer der Prägeform zu erhöhen, als auch ein chemisches Angreifen der Prägeform durch das Material des Polarisators zu vermeiden, kann die mit den Erhebungen versehene Fläche der Prägeform oberflächenbehandelt sein, wobei es vorteilhaft ist, wenn die mit den Erhebungen versehene Fläche hartverchromt ist.

Weiterhin kann vorteilhafterweise an der dem Polarisator abgewandten Seite der Prägeform ein Heizelement angeordnet sein, durch das der Polarisator beim Prägevorgang erwärmt werden kann.

Die Erhebungen der Prägeform können zum Beispiel durch Ätzen oder durch Sandstrahlen hergestellt werden. Bei dem Sandstrahlverfahren kann entweder kugelförmiges Sandstrahlmaterial oder kantiges Sandstrahlmaterial verwandt werden, wobei ersteres zu mehr halbkugelförmigen Vertiefungen und letzteres zu mehr pyramidenförmigen Vertiefungen am Polarisator führt.

Ein Ausführungsbeispiel der Erfindung ist in der Zeichnung dargestellt. Es zeigen:

Fig. 1 ein Ausführungsbeispiel eines erfindungsgemässen Anzeigeelements im Schnitt;

Fig. 2 ein Werkzeugaufbau zur Herstellung der Vertiefungen der Polarisatoren.

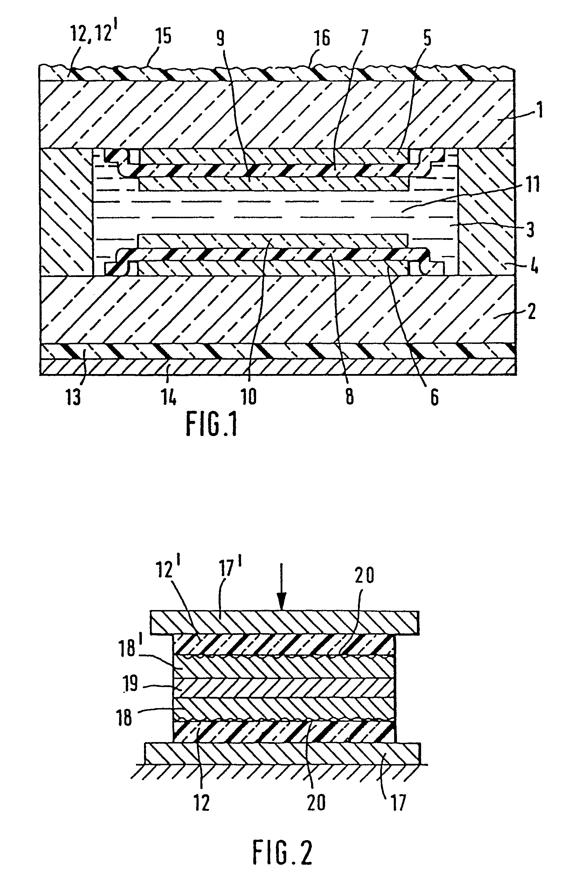

Das in Fig. 1 dargestellte elektrooptische Anzeigeelement weist zwei im Abstand voneinander angeordnete Glasplatten 1 und 2 auf, die zwischen sich eine Kammer 3 bilden. Diese Kammer 3 ist seitlich durch ein Verschlussteil 4 verschlossen.

Kammerseitig sind auf den Glasplatten 1 und 2 durchsichtige Elektrodenträger 5 und 6 aufgebracht, auf denen eine Isolierschicht 7 und 8 und eine Orientierungsschicht 9 und 10 angeordnet sind.

Gefüllt ist die Kammer 3 mit einer Flüssigkristallsubstanz 11.

Auf den Aussenflächen der Glasplatten 1 und 2 sind Polarisatoren 12 und 13 angeordnet, wobei der der Sichtseite 15 des Anzeigeelements entfernte Polarisator 13 noch einen Reflektor 14 trägt.

Der Polarisator 12 ist mit einer Vielzahl Vertiefungen 16 irregulärer Struktur versehen.

Durch diese Vertiefungen 16 wird das von der Sichtseite 15 auf den Polarisator 12 auftreffende Licht stark gestreut reflektiert, so dass es nicht zu einer Spiegelung kommen kann.

In Fig. 2 ist ein Werkzeugaufbau zur Herstellung der Vertiefungen 16 in den Polarisatoren 12 und 12' dargestellt. Dabei ist auf einer ersten Gegenplatte 17 ein Polarisator 12 angeordnet, auf dem eine erste Prägeform 18 liegt. Auf der Prägeform 18 ist ein Heizelement 19, darauf wieder eine Prägeform 18', der zweite Polarisator 12' und eine zweite Gegenplatte 17' angeordnet.

Die vorzugsweise aus Messing bestehende Prägeformen 18 und 18' weisen an ihren den Polarisatoren 12 und 12' zugewandten Flächen eine Vielzahl kleiner Erhebungen 20 auf, die den später im geprägten Polarisator vorhandenen Vertiefungen entsprechen, wie sie in Fig. 1 dargestellt sind.

Zumindest an den mit den Erhebungen 20 versehenen Flächen sind die Prägeformen 18 und 18' hartverchromt, um deren Lebensdauer zu erhöhen.

Hergestellt sind die Erhebungen 20 durch zum Beispiel Sandstrahlen oder Ätzen der Prägeform 18 und 18'.

Beim Prägevorgang wird die Gegenplatte 17' druckbeaufschlagt und dabei das ganze Paket aus Gegenplatte 17, Polarisatoren 12 und 12', Prägeformen 18 und 18' und Heizelement 19 zusammengedrückt. Dadurch wird in die Polarisatoren 12 und 12' die Struktur der Erhebungen 20 der Prägeformen 18 und 18' eingedrückt, so dass die Polarisatoren 12 und 12' anschliessend mit den Vertiefungen 16 versehen sind. Damit diese Verformung plastisch erfolgt, werden die Polarisatoren 12 und 12' während des Prägevorgangs durch das Heizelement 19 etwärmt, womit man die Höhe des Zusammenpressdruckes und die Dauer des Pressvorgangs relativ niedrig halten kann.

Es versteht sich, dass man bei Anordnung mehrerer solcher Pakete, wie sie in Fig. 2 dargestellt sind, die Polarisatoren mit noch grösserer Wirtschaftlichkeit herstellen kann.

**Patentansprüche**

1. Passives elektrooptisches Anzeigeelement zur Darstellung von Informationen, mit zwei im Abstand voneinander angeordneten, eine Kammer zwischen sich bildenden Glasplatten, an denen kammerseitig jeweils ein durchsichtiger Elektrodenträger angeordnet ist, zwischen denen die Kammer mit einer Flüssigkristallsubstanz gefüllt ist, und an deren Aussenflächen Polarisatoren angeordnet sind, dadurch gekennzeichnet, dass der Polarisator (12, 12') auf der Sichtseite (15) des Anzeigeelements an seiner der Glasplatte (1) abgewandten Fläche mit einer Vielzahl von Vertiefungen (16) irregulärer Struktur versehen ist.

2. Anzeigeelement nach Anspruch 1, dadurch gekennzeichnet, dass die Vertiefungen (16) einen etwa halbkugelförmigen Querschnitt besitzen.

3. Anzeigeelement nach Anspruch 1, dadurch gekennzeichnet, dass die Vertiefungen (16) einen etwa pyramidenförmigen Querschnitt besitzen.

4. Verfahren zur Herstellung eines Anzeigeelements nach einem der vorhergehenden Ansprüche, dadurch gekennzeichnet, dass die Vertiefungenn (16) durch einen Prägevorgang hergestellt werden.

5. Verfahren nach Anspruch 4, dadurch gekennzeichnet, dass der Prägevorgang ein Warmverformungsvorgang ist.

6. Verfahren nach den Ansprüchen 4 und 5, dadurch gekennzeichnet, dass der Prägevorgang durch Zusammenpressen eines Blocks von ein oder mehreren aufeinander geschichteten Paketen, bestehend aus Gegenplatte (17, 17'), Polarisator (12, 12'), Prägeform (18, 18') und Heizelement (19) erfolgt.

7. Vorrichtung zur Durchführung des Verfahrens nach Anspruch 4, dadurch gekennzeichnet, dass die Prägeform (18, 18') eine mit den Vertiefungen (16) entsprechenden Erhebungen (20) versehene Hartmetallplatte ist, durch die der Polarisator (12, 12') gegen eine Gegenplatte (17, 17') pressbar ist.

8. Vorrichtung zur Durchführung des Verfahrens nach Anspruch 4, dadurch gekennzeichnet, dass die Prägeform eine mit den Vertiefungen entsprechenden Erhebungen versehene drehbare Prägewalze ist, zwischen der und einer dazu parallel angeordneten, ebenfalls drehbaren Gegenwalze der Polarisator durchlaufbar ist.

9. Vorrichtung nach einem der beiden Ansprüche 7 oder 8, dadurch gekennzeichnet, dass die Prägeform (18, 18') aus Messing besteht.

10. Vorrichtung nach einem der beiden Ansprüche 7 oder 8, dadurch gekennzeichnet, dass die mit den Erhebungen (20) versehene Fläche der Prägeform (18, 18') oberflächenbehandelt ist.

11. Vorrichtung nach Anspruch 10, dadurch gekennzeichnet, dass die mit den Erhebungen (20) versehene Fläche hartverchromt ist.

12. Vorrichtung nach einem der Ansprüche 7, 8, 9, 10 oder 11, dadurch gekennzeichnet, dass an der dem Polarisator (12, 12') abgewandten Seite der Prägeform (18, 18') ein Heizelement (19) angeordnet ist.

13. Verfahren zur Herstellung einer Vorrichtung nach einem der beiden Ansprüche 7 und 8, dadurch gekennzeichnet, dass die Erhebungen (20) durch Ätzen hergestellt werden.

14. Verfahren zur Herstellung einer Vorrichtung nach einem der beiden Ansprüche 7 und 8, dadurch gekennzeichnet, dass die Erhebungen (20) durch Sandstrahlen hergestellt werden.

15. Verfahren nach Anspruch 14, dadurch gekennzeichnet, dass das Sandstrahlen mit kugelförmigem Sandstrahlmaterial ausgeführt wird.

16. Verfahren nach Anspruch 14, dadurch gekennzeichnet, dass das Sandstrahlen mit kantigem Sandstrahlmaterial ausgeführt wird.

**Claims**

1. Passive electro-optical indicating element for the representation of data, having two spaced-apart glass plates which form a chamber between themselves and on the chamber side of each of which there is arranged a transparent electrode carrier, between which the chamber is filled with a liquid crystal substance, and on the outer surfaces of which polarisers are arranged, characterised in that the polariser (12, 12') at the viewing side (15) of the indicating element is provided at its surface remote from the glass plate (1) with a plurality of depressions (16) of an irregular structure.

2. Indicating element according to claim 1, characterised in that the depressions (16) have a substantially hemispherical cross-section.

3. Indicating element according to claim 1, characterised in that the depressions (16) have a substantially pyramidical cross-section.

4. Process for the production of an indicating element according to one of the preceding claims, characterised in that the depressions (16) are produced by a stamping operation.

5. Process according to claim 4, characterised in that the stamping operation is a hot forming operation.

6. Process according to claims 4 and 5, characterised in that the stamping operation is effected by compression of a block consisting of one or more packs stacked on one another, comprising counter-plate (17, 17'), polariser (12, 12'), stamping mould (18, 18') and heating element (19).

7. Apparatus for carrying out the process according to claim 4, characterised in that the stamping mould (18, 18') is a hard metal plate which is provided with projections (20) corresponding to the depressions (16) and whereby the polariser (12, 12') is adapted to be pressed against a counter-plate (17, 17').

8. Apparatus for carrying out the process according to claim 4, characterised in that the stamping mould is a rotatable stamping roll which is provided with projections corresponding to the depressions and between which and a likewise rotatable counter-roll situated parallel to the stamping roll the polariser can travel through.

9. Apparatus according to claim 7 or 8, characterised in that the stamping mould (18, 18') is made of brass.

10. Apparatus according to claim 7 or 8, characterised in that the surface of the stamping mould (18, 18') which is provided with projections (20) is given surface treatment.

11. Apparatus according to claim 10, characterised in that the surface provided with projections (20) is hard chromium plated.

12. Apparatus according to claim 7, 8, 9, 10 or 11, characterised in that a heating element (19) is arranged at that side of the stamping mould (18, 18') which is remote from the polariser (12, 12').

13. Process for the production of an apparatus according to claim 7 or 8, characterised in that the projections (20) are produced by etching.

14. Process for the production of an apparatus according to claim 7 or 8, characterised in that the projections (20) are produced by sand blasting.

15. Process according to claim 14, characterised in that the sand blasting is carried out with spherical sand blasting material.

16. Process according to claim 14, characterised in that the sand blasting is carried out with angular or polygonal sand blasting material.

**Revendications**

1. Elément passif électro-optique d'affichage pour la représentation d'informations, comportant deux plaques de verre distantes l'une de l'autre, formant entre elles une chambre, présentant sur leur face tournée vers la chambre un support respectif transparent d'électrode, plaques entre lesquelles la chambre est emplie d'une substance à cristaux liquides et sur les faces externes desquelles se trouvent des polarisateurs, caractérisé par le fait que, du côté observation (15) de l'élément d'affichage, le polarisateur (12, 12') présente de nombreux renfoncements (16) de structure irrégulière sur sa face éloignée de la plaque de verre (1).

2. Elément d'affichage selon la revendication 1, caractérisé par le fait que les renfoncements (16) possèdent une section sensiblement hémisphérique.

3. Elément d'affichage selon la revendication 1, caractérisé par le fait que les renfoncements (16) possèdent une section sensiblement pyramidale.

4. Procédé de fabrication d'un élément d'affichage selon l'une des revendications précédentes, caractérisé par le fait que les renfoncements (16) sont réalisés par un processus d'emboutissage.

5. Procédé selon la revendication 4, caractérisé par le fait que le processus d'emboutissage est un processus de déformation à chaud.

6. Procédé selon les revendications 4 et 5, caractérisé par le fait que le processus d'emboutissage a lieu par compression d'un bloc d'un ou de plusieurs empilements superposés comprenant une contre-plaque (17, 17'), un polarisateur (12, 12'), une matrice d'emboutissage (18, 18') et un élément de chauffage (19).

7. Dispositif pour la mise en œuvre du procédé selon la revendication 4, caractérisé par le fait que la matrice d'emboutissage (18, 18') est une plaque en métal dur dotée de protubérances (20) correspondant aux renfoncements (16), au moyen de laquelle le polarisateur (12, 12') peut être pressé sur une contre-plaque (17, 17').

8. Dispositif pour la mise en œuvre du procédé selon la revendication 4, caractérisé par le fait que la matrice d'emboutissage consiste en un cylindre rotatif d'emboutissage présentant des protubérances correspondant aux renfoncements, le polarisateur pouvant être engagé entre ce cylindre et un contre-cylindre également rotatif, parallèle audit cylindre.

9. Dispositif selon l'une des revendications 7 ou 8, caractérisé par le fait que la matrice d'emboutissage (18, 18') consiste en du laiton.

10. Dispositif selon l'une des revendications 7 ou 8, caractérisé par le fait que la surface de la matrice d'emboutissage (18, 18') munie des protubérances (20) est soumise à un traitement superficiel.

11. Dispositif selon la revendication 10, caractérisé par le fait que la surface dotée des protubérances (20) est revêtue de chrome dur.

12. Dispositif selon l'une des revendications 7, 8, 9, 10 ou 11, caractérisé par le fait qu'un élément chauffant (19) est disposé sur la face de la matrice d'emboutissage (18, 18') éloignée du polarisateur (12, 12').

13. Procédé de fabrication d'un dispositif selon l'une des revendications 7 ou 8, caractérisé par le fait que les protubérances (20) sont élaborées par décapage.

14. Procédé de fabrication d'un dispositif selon l'une des revendications 7 ou 8, caractérisé par le fait que les protubérances (20) sont élaborées par sablage.

15. Procédé selon la revendication 14, caractérisé par le fait que le sablage est effectué à l'aide d'une matière de sablage sphérique.

16. Procédé selon la revendication 14, caractérisé par le fait que le sablage est effectué à l'aide d'une matière de sablage anguleuse.

FIG.1

FIG.2